# EUROPÄISCHE PATENTANMELDUNG

(11) **EP 3 995 913 A1**
(43) Veröffentlichungstag der Anmeldung: **11.05.2022**
(21) Anmeldenummer: 20206214.7
(22) Anmeldetag: 06.11.2020
(51) Int. Cl.: G05B 19/406, G05B 19/409, G05B 19/18

(54) **BEDIENVORRICHTUNG FÜR MINDESTENS EINE TECHNISCHE ANLAGE, TECHNISCHE ANLAGE, VERWENDUNG EINER BEDIENVORRICHTUNG UND VERFAHREN ZUM BEDIENEN MINDESTENS EINER TECHNISCHEN ANLAGE**

(71) Anmelder: Bystronic Laser AG, 3362 Niederönz (CH)
(72) Erfinder: Seibert, Friedemann, 66484 Winterbach/Pfalz (DE); Rödiger, Benjamin, 99885 Ohrdruf (DE)
(74) Vertreter: Patentanwälte Geyer, Fehners & Partner mbB

(57) **Zusammenfassung**

Es wird eine Bedienvorrichtung für mindestens eine technische Anlage bereitgestellt, mit mindestens einer mobilen Bedieneinheit zum Bedienen der mindestens einen technischen Anlage; und mit mindestens einer der technische Anlage ortsfest zuordnenbaren und mit dieser energie- und signalübertragend verbindbaren Versorgungseinheit zum Versorgen mindestens einer mobilen Bedieneinheit mit Energie; wobei die mindestens eine mobile Bedieneinheit und die mindestens eine Versorgungseinheit eine Einrichtung zur drahtlosen Energieübertragung mit einer Übertragungsfrequenz innerhalb eines vorbestimmten Abstands zwischen der Versorgungseinheit und der mobilen Bedieneinheit und zur drahtlosen Übertragung eines Sicherheitsprotokolls im Verlauf der Energieübertragung aufweisen. Ferner werden eine technische Anlage und ein Verfahren zum Bedienen einer technischen Anlage angegeben.

## Beschreibung

Die vorliegende Erfindung betrifft eine Bedienvorrichtung für mindestens eine technische Anlage, eine technische Anlage, eine Verwendung einer Bedienvorrichtung und ein Verfahren zum Bedienen mindestens einer technischen Anlage.

Bedienelemente für technische Anlagen, wie Werkzeugmaschinen, insbesondere Biegemaschinen, sind typischerweise mit Not-Halt-Einrichtungen versehen, die unverwechselbar einer technischen Anlage zugeordnet ist. Um sicher zu stellen, dass nur wirksame Not-Halt-Einrichtungen als solche erkannt werden, hat die Fa. PILZ in Zusammenarbeit mit der Fa. Steute einen Not-Halt-Taster entwickelt, der nur bei vorhandener Energieversorgung in den für Not-Halt-Einrichtungen typischen Farben beleuchtet ist und ansonsten in unscheinbarem Grau erscheint.

Um eine Fehlbedienung von benachbarten Werkzeugmaschinen oder eine Verwechselung der Not-Halt-Einrichtung zu vermeiden, sind Bedieneinrichtungen von Werkzeugmaschinen typischerweise drahtgebunden. Eine Ausnahme bilden Tablet-Steuerungen, mit denen jedoch nur Bewegungen ausgelöst werden dürfen, die die Sicherheit, z.B. eines Bedieners der Werkzeugmaschine, nicht beeinträchtigen können. Die Verdrahtung der Bedieneinrichtungen stellt einen Nachteil dar, weil die Kabel der Verdrahtung mit den Bedieneinrichtungen mitgezogen werden müssen, im Wege liegen oder durch Überfahren oder Knicken beschädigt werden können.

Aus der DE 10 2011 083 817 A1 ist ein Verfahren zum Aufbauen einer drahtlosen Verbindung eines Kommunikationsgeräts mit einer Werkzeugmaschine bekannt.

Aufgabe der Erfindung ist es, eine Bedienvorrichtung für eine technische Anlage und ein Verfahren zum Bedienen mindestens einer technischen Anlage mit einer Bedienvorrichtung anzugeben, mit denen die Sicherheit beim Bedienen der technischen Anlage gefördert wird.

Diese Aufgabe wird gelöst durch eine Bedienvorrichtung nach Anspruch 1, eine technische Anlage nach Anspruch 14, eine Verwendung nach Anspruch 15 und ein Verfahren zum Bedienen mindestens einer technischen Anlage nach Anspruch 16.

Eine Ausführungsform der Erfindung betrifft eine Bedienvorrichtung für mindestens eine technische Anlage, insbesondere für mindestens eine Werkzeugmaschine, insbesondere eine Biegemaschine, mit mindestens einer mobilen Bedieneinheit zum Bedienen der mindestens einen technischen Anlage; und mit mindestens einer der technische Anlage ortsfest zuordnenbaren und mit dieser energie- und signalübertragend verbindbaren Versorgungseinheit zum Versorgen der mindestens einen mobilen Bedieneinheit mit Energie; wobei die mindestens eine mobile Bedieneinheit und die mindestens eine Versorgungseinheit eine Einrichtung zur drahtlosen Energieübertragung mit einer Übertragungsfrequenz innerhalb eines vorbestimmten Abstands zwischen der Versorgungseinheit und der mobilen Bedieneinheit und zur drahtlosen Übertragung eines Sicherheitsprotokolls im Verlauf der Energieübertragung aufweisen.

Die Bedienvorrichtung ermöglicht, die mindestens eine mobile Bedieneinheit drahtlos und an einem genau lokalisierbaren Ort mit Energie und einem Sicherheitsprotokoll und optional mit anderen Daten zu versorgen. Da also nur im Falle einer drahtlosen Energieübertragung an die mobile Bedieneinheit auch das Sicherheitsprotokoll drahtlos übertragen und ausgeführt wird und so die Bedienung der Anlage ermöglicht wird, wird die Sicherheit der technischen Anlage gefördert. Zudem kann im Verlauf der drahtlosen Energieübertragung von der ortsfesten Versorgungseinheit zur mobilen Bedieneinheit deren Standort ermittelt werden. Ferner wird die Energie-, Daten- sowie Sicherheitsprotokoll-Übertragung zwischen der Versorgungseinheit und der mobilen Bedieneinheit ohne störende, die Sicherheit beeinträchtigende Verdrahtung realisiert. Zusätzlich wird die Sicherheit bei der Bedienung der technischen Anlage dadurch erhöht, dass die mindestens eine mobile Bedieneinheit nur innerhalb des vorbestimmten Abstands zur mindestens einen Versorgungseinheit mit Energie versorgt und das Sicherheitsprotokoll ausgeführt werden kann. Eine Fehlbedienung von benachbarten technischen Anlagen, wie Werkzeugmaschinen, kann so vermieden werden, da die mobile Bedieneinheit nur innerhalb des vorbestimmten Abstands zu ihrer zugeordneten Versorgungseinheit funktioniert und so benachbarte, nicht zugeordnete technische Anlagen nicht betätigt werden können. Somit wird die Verwechslungssicherheit gefördert. Auch kann eine Verwechselung von Not-Halt-Einrichtungen benachbarter technischer Anlagen vermieden werden. Denn nur innerhalb des vorbestimmten Abstands zu ihrer zugeordneten Versorgungseinheit wird die mobile Bedieneinheit und ihre Not-Halt-Einrichtung mit Energie versorgt und z.B. ein an der mobilen Bedieneinheit vorgesehener Not-Halt-Schalter beleuchtet.

Die Bedienvorrichtung von Ausführungsformen kann daher die Sicherheit von sicherheitsgerichteten technischen Anlagen erhöhen. Insbesondere kann die Maschinensicherheit nach Performance Level, von Normen zur allgemeinen Maschinensicherheit und/oder beispielsweise der C-Norm für hydraulische Abkantpressen (EN12622) unterstützt werden.

Eine mobile Bedieneinheit kann zum Bedienen mehrerer technischer Anlagen mit jeweils einer oder mehreren Versorgungseinheiten ausgestaltet sein. Es können ferner mehrere mobile Bedieneinheiten zum Bedienen einer technischen Anlage mittels einer oder mehreren Versorgungseinheiten ausgestaltet sein. Z.B. können mehrere mobile Bedieneinheiten, insbesondere bei der Bearbeitung von großen Werkstücken, UND-verknüpft innerhalb des vorbestimmten Abstands für eine technische Anlage eingesetzt werden. Beispielsweise kann die technische Anlage von zwei Bedienern bedient werden und beide Bediener müssen zeitgleich jeweils eine mobile Bedieneinheit betätigten, um das Werkstück zu bearbeiten, was die Sicherheit bei der Bedienung der technischen Anlage erhöht. Weiterhin können mehrere mobile Bedieneinheiten für mehrere technische Anlagen eingesetzt werden, wobei z.B. an einer bestimmten technischen Anlage, wie einer Werkzeugstation, nur jeweils eine mobile Bedieneinheit aktiv ist. Auf diese Weise kann ein häufiger Transport der mobilen Bedieneinheit zwischen unterschiedlichen technischen Anlagen oder Werkzeugstationen vermieden werden.

In der vorstehenden Ausführungsform kann das Sicherheitsprotokoll zumindest teilweise auf die Übertragungsfrequenz abgestimmt und/oder zumindest teilweise auf diese aufmoduliert sein. So kann das Sicherheitsprotokoll zusammen mit der Energie auf einfache Weise übertragen werden. Ferner kann das Sicherheitsprotokoll als eine Folge von Signalen, insbesondere als zwischen der Versorgungseinheit und der mobilen Bedieneinheit austauschbare Signale, ausgebildet sein.

Die Versorgungseinheit kann mindestens ein Mittel zur Energieübertragung und zum Signalaustausch aufweisen. Die mobile Bedieneinheit kann mindestens ein Mittel zum Energieempfang und zum Signalaustausch aufweisen. Der vorbestimmte Abstand kann zwischen der Versorgungseinheit und der mobilen Bedieneinheit, insbesondere zwischen dem Mittel zur Energieübertragung und zum Signalaustausch und dem Mittel zum Energieempfang und zum Signalaustausch, 0-100 cm, vorzugsweise 1-50 cm, besonders bevorzugt 1-10 cm betragen. Dieser Abstand fördert die Anlagensicherheit.

Die Versorgungseinheit, insbesondere das Mittel zur Energieübertragung und zum Signalaustausch, kann in eine Trittschutzmatte oder in einen Fußschalter integriert sein. Im Falle der Trittschutzmatte kann so die Funktion des Trittschutzes mit den weiteren Vorteilen der mobilen Bedienvorrichtung kombiniert werden. Ferner kann die Versorgungseinheit in einen Boden einer Werkhalle integriert sein.

Die Versorgungseinheit, insbesondere das Mittel zur Energieübertragung und zum Signalaustausch, kann zum Übertragen der Energie und/oder Austauschen der Signale mittels elektromagnetischer Strahlung, insbesondere mittels magnetischer Induktion, Funkwellen und/oder Licht, ausgebildet sein. Ferner kann die mobile Bedieneinheit, insbesondere das Mittel zum Energieempfang und zum Signalaustausch, zum Empfangen der Energie und/oder Austauschen der Signale mittels elektromagnetischer Strahlung, insbesondere mittels magnetischer Induktion, Funkwellen und/oder Licht, ausgebildet sein. Auf diese Weise kann die Energieübertragung und der Signalaustausch zuverlässig drahtlos realisiert werden. Beispielsweise kann die Versorgungseinheit und die mobile Bedieneinheit jeweils mindestens eine elektrische Spule aufweisen. Ausführungsformen können zur Energieübertragung mittels induktiver Kopplung, resonant induktiver Kopplung, kapazitiver Kopplung, via Laser und/oder via Mikrowellen ausgebildet sein.

Das Mittel zum Energieempfang und zum Signalaustausch der mobilen Bedieneinheit und das Mittel zur Energieübertragung und zum Signalaustausch der Versorgungseinheit können aufeinander abgestimmt oder abstimmbar sein. Ferner kann der vorbestimmte Abstand zwischen der Versorgungseinheit und der mobilen Bedieneinheit durch einen maximalen Übertragungsabstand zwischen den Überträgereinheiten der Einrichtung zur drahtlosen Energieübertragung, z.B. eine vorbestimmte Reichweite der Einrichtung zur drahtlosen Energieübertragung bzw. ihrer Mittel zur Energieübertragung und/oder zum Energieempfang, vorgegeben sein.

Mindestens zwei Versorgungseinheiten, insbesondere mindestens zwei Trittschutzmatten, können mechanisch, energieübertragend, signalübertragend und/oder datenleitend miteinander verbunden oder verbindbar sein. Hierfür können entsprechende Schnittstellen an den Versorgungseinheiten vorgesehen sein. Beispielsweise können mehreren Trittschutzmatten zu einem Verbund, auch Cluster genannt, verbunden oder verbindbar sein. Dabei kann die Größe der Versorgungeinheiten an die Größe der mobilen Bedieneinheit und/oder an die Größe der mindestens einen technischen Anlage angepasst sein. Ferner kann die resultierende Größe der verbundenen oder verbindbaren Versorgungseinheiten an die Größe der mindestens einen technischen Anlage angepasst sein. Die Größe der Versorgungseinheiten und/oder der vorbestimmte Abstand kann/können ferner derart gewählt sein, dass mittels derjenigen der verbundenen Versorgungseinheiten, die innerhalb des vorbestimmten Abstands zu der mobilen Bedieneinheit angeordnet ist/sind, die Energie von einer der technischen Anlagen an die mobile Bedieneinheit drahtlos übertragbar ist oder übertragen wird. Beispielsweise kann in einem Cluster von verbundenen Trittschutzmatten nur am Standort der zu versorgenden mobilen Bedieneinheit, d.h. über die Trittschutzmatte(n), in deren vorbestimmten Abstand sich die mobile Bedieneinheit befindet, die Energie- und Sicherheitsprotokoll-Übertragung stattfinden. Dabei können die außerhalb des vorbestimmten Abstands angeordneten Trittschutzmatten inaktiv oder auf Stand-by geschaltet sein.

Ferner kann das Sicherheitsprotokoll eine einseitige oder wechselseitige Authentifikation und/oder eine einseitige oder wechselseitige Funktionsfähigkeitsprüfung der Versorgungseinheit, der mobilen Bedieneinheit und/oder der technischen Anlage beinhalten. Auf diese Weise wird die Sicherheit bei der Bedienung der technischen Anlage zusätzlich gefördert. Insbesondere die wechselseitige Authentifikation der Versorgungseinheit, der mobilen Bedieneinheit und/oder der technischen Anlage, z.B. zu Beginn der drahtlosen Energieübertragung, stützen die Verwechslungssicherheit, insbesondere in Bezug auf benachbarte technische Anlagen.

Mindestens ein Element ausgewählt aus der mindestens einen Versorgungseinheit und der mindestens einen mobilen Bedieneinheit kann ein Steuermodul aufweisen, das mit einer zentralen Steuerung der technischen Anlage datenleitend verbunden oder verbindbar ist, insbesondere drahtlos und/oder drahtgebunden. Dabei kann die mindestens eine Versorgungseinheit und/oder die mindestens eine mobile Bedieneinheit, insbesondere mittels des jeweiligen Steuermoduls, zum drahtlosen Übertragen der Energie von einer der technischen Anlagen an die mobile Bedieneinheit nur unter der Voraussetzung, dass die mobile Bedieneinheit innerhalb des vorbestimmten Abstands zur Versorgungseinheit angeordnet ist, ausgebildet sein. Außerdem kann die mindestens eine Versorgungseinheit und/oder die mindestens eine mobile Bedieneinheit, insbesondere mittels des jeweiligen Steuermoduls, zum drahtlosen Übertragen zumindest eines Teils der Energie von einer der technischen Anlagen an die mobile Bedieneinheit nur unter der Voraussetzung, dass die mobile Bedieneinheit an der zentralen Steuerung einer der technischen Anlagen angemeldet ist, ausgebildet sein. Dies fördert die Sicherheit bei der Bedienung der technischen Anlage.

Die mindestens eine Versorgungseinheit kann zum Schalten in einen stromlosen Zustand und/oder Standby-Zustand bei Abwesenheit einer drahtlosen Energieübertragung und/oder bei Abwesenheit einer drahtlosen Signalübertragung und/oder außerhalb des vorbestimmten Abstands zu der mobilen Bedieneinheit ausgebildet sein. Mindestens ein Element ausgewählt aus der mindestens einen Versorgungseinheit, der mindestens einen mobilen Bedieneinheit, dem Steuermodul der Versorgungseinheit und dem Steuermodul der mindestens einen mobilen Bedieneinheit kann zum Ermitteln der Anbindung der mindestens einen mobilen Bedieneinheit an die technische Anlage bei drahtloser Energieübertragung an die mobile Bedieneinheit und/oder drahtlose Signalübertragung zu der mobilen Bedieneinheit ausgebildet sein. Auf diese Weise kann nicht nur die Einsatzbereitschaft und/oder Funktionsfähigkeit, sondern auch der Standort der mobilen Bedieneinheit ermittelt werden.

Eine Ausführungsform der Erfindung betrifft ferner eine technische Anlage, Werkzeugmaschine oder Biegemaschine, insbesondere sicherheitsgerichtete technische Anlage, Werkzeugmaschine oder Biegemaschine, mit einer Bedienvorrichtung nach einer der vorstehend beschriebenen Ausführungsformen und Ausgestaltungen.

Eine weitere Ausführungsform der Erfindung betrifft eine Verwendung einer Bedienvorrichtung nach einer der vorstehend beschriebenen Ausführungsformen und Ausgestaltungen zur Bedienung mindestens einer technischen Anlage, Werkzeugmaschine oder Biegemaschine, insbesondere einer sicherheitsgerichteten technischen Anlage, Werkzeugmaschine oder Biegemaschine.

Eine andere Ausführungsform der Erfindung betrifft ein Verfahren zum Bedienen mindestens einer technischen Anlage mit einer Bedienvorrichtung, insbesondere mit einer Bedienvorrichtung nach einer der vorstehenden Ausführungsformen und Ausgestaltungen, insbesondere zum Bedienen mindestens einer Werkzeugmaschine oder mindestens einer Biegemaschine, wobei die Bedienvorrichtung mindestens eine mobile Bedieneinheit zum Bedienen der mindestens einen technischen Anlage und mindestens eine Versorgungseinheit zum Versorgen der mindestens einen mobilen Bedieneinheit mit Energie aufweist; wobei die Versorgungseinheit der technische Anlage ortsfest zugeordnet und mit dieser energie- und signalübertragend verbunden ist; wobei das Verfahren aufweist: Versorgen mindestens einer der mobilen Bedieneinheiten mit Energie, wobei innerhalb eines vorbestimmten Abstands zwischen einer der Versorgungseinheiten und der mobilen Bedieneinheit die Energie drahtlos mit einer Übertragungsfrequenz übertragen wird und wobei im Verlauf der Energieübertragung ein Sicherheitsprotokoll drahtlos übertragen wird.

Die mindestens eine technische Anlage kann vermittelt über die Versorgungseinheit über die mobile Bedieneinheit bedient werden. Als Sicherheitsprotokoll können Signale zwischen der Versorgungseinheit und der mobilen Bedieneinheit drahtlos ausgetauscht werden. Das Sicherheitsprotokoll kann als eine Folge von Signalen übertragen werden. Das Sicherheitsprotokoll kann zumindest teilweise auf die Übertragungsfrequenz abgestimmt und/oder zumindest teilweise auf diese aufmoduliert werden.

Mit der vorstehend angegebenen technischen Anlage, der Verwendung einer Bedienvorrichtung und/oder dem Verfahren zum Bedienen mindestens einer technischen Anlage können die gleichen Vorteile, Betriebsmodi und Funktionen realisiert werden, wie mit den Ausführungsformen und Ausgestaltungen der Bedienvorrichtung für mindestens eine technische Anlage, insbesondere mit gleichlautenden und/oder analogen Merkmalen.

Weitere Merkmale und Zweckmäßigkeiten ergeben sich aus der folgenden Beschreibung von Ausführungsformen, den Figuren und den Unteransprüchen.

Alle hier beschriebenen und sich nicht gegenseitig ausschließenden Merkmale von Ausführungsformen können miteinander kombiniert werden. Gleiche Elemente der Ausführungsformen sind in der folgenden Beschreibung mit den gleichen Bezugszeichen versehen. Elemente einer Ausführungsform können in den anderen Ausführungsformen genutzt werden ohne weitere Erwähnung. Ausführungsformen der Erfindung werden nun durch die nachfolgenden Beispiele anhand von Figuren genauer beschrieben, ohne sie dadurch einschränken zu wollen. Es zeigen:
- Fig. 1: schematisch ein Beispiel einer Bedienvorrichtung 10 für mindestens eine technische Anlage, gemäß Ausführungsformen der Erfindung;
- Fig. 2a und 2b: jeweils schematisch die Bedienvorrichtung 10 mit einer technischen Anlage 100; und
- Fig. 3a bis 3c: schematisch ein Beispiel eines Verfahrens zum Bedienen mindestens einer technischen Anlage, gemäß Ausführungsformen der Erfindung.

Der Ausdruck "der technische Anlage ortsfest zuordnenbaren Versorgungseinheit" bedeutet, dass die Versorgungseinheit der technischen Anlage ortsfest zugeordnet werden kann, z.B. ortsfest an der technischen Anlage vorgesehen werden kann und/oder durch Signale oder Datenübertragung als an der technischen Anlage ortsfest vorgesehen erkannt werden kann. Der Ausdruck "der technische Anlage ortsfest zugeordnet wird" bedeutet, dass die Versorgungseinheit ortsfest an der technischen Anlage vorgesehen wird und/oder als an der technischen Anlage ortsfest vorgesehen erkannt wird. Der Begriff "zur drahtlosen Energieübertragung mit einer Übertragungsfrequenz innerhalb eines vorbestimmten Abstands" bedeutet, dass die Einrichtung zur drahtlosen Energieübertragung eine drahtlose Energieübertragung mit einer Übertragungsfrequenz und eine drahtlose Übertragung eines Sicherheitsprotokolls sowie optionaler weiterer Daten im Verlauf der Energieübertragung dann ermöglicht, wenn die Versorgungseinheit und die mobile Bedieneinheit, insbesondere deren Mittel zur Energieübertragung und deren Mittel zum Energieempfang, sich zumindest teilweise innerhalb des vorbestimmten Abstands befinden. In der nachfolgenden Beschreibung von Ausführungsformen und Beispielen werden die Begriffe technische Anlage und Maschine synonym verwendet. Auch werden Ausführungsformen der Erfindung im Folgenden anhand einer Biegemaschine als technische Anlage bzw. Maschine beschrieben, ohne die Erfindung darauf zu begrenzen. Ferner wird die mobile Bedieneinheit im Folgenden auch Bedieneinheit genannt. Ferner gilt hier für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können.

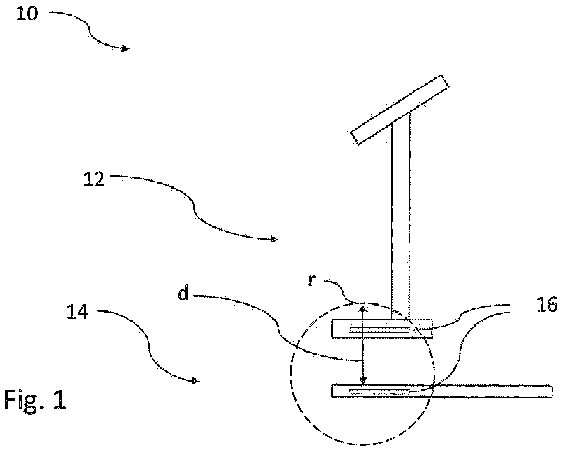

Fig. 1 zeigt schematisch als ein Beispiel eine Bedienvorrichtung 10 für eine technische Anlage. Die Bedienvorrichtung 10 weist eine mobile Bedieneinheit 12 zum Bedienen der technischen Anlage und eine Versorgungseinheit 14 zum Versorgen der mobilen Bedieneinheit 12 mit Energie auf.

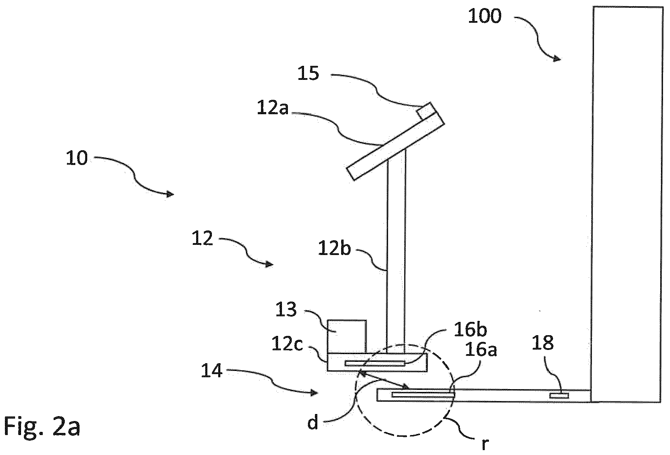

Wie in Fig. 2a gezeigt, beinhaltet im vorliegenden Beispiel die mobile Bedieneinheit 12 an ihrem oberen Ende eine Anzeige- und Eingabevorrichtung 12a, z.B. ein Touchscreen, an ihrem unteren Ende ein Basiselement 12c und ein Ständerelement 12b zwischen der Anzeige- und Eingabevorrichtung 12a und dem Basiselement 12c. Zum Verschieben der mobilen Bedieneinheit 12 auf dem Boden können im Basiselement 12c Rollen (nicht gezeigt) vorgesehen sein. Im Basiselement 12c ist im vorliegenden Beispiel ein Fußschalter 13, angeordnet, der von einem Bediener der technischen Anlage zum Bedienen derselben mit seinem Fuss betätigt werden kann. Ferner ist in der Anzeige- und Eingabevorrichtung 12a ein Not-Halt-Schalter 15 vorgesehen, der zum Stoppen der technischen Anlage in Notsituationen vom Bediener betätigt werden kann.

In Beispielen kann die technische Anlage anhand der Bedienvorrichtung 12 zusätzlich oder alternativ zum Fußschalter 13 mittels der Anzeige- und Eingabevorrichtung 12a bedient werden. Beispielsweise kann in der mobilen Bedieneinheit 12 kein Fußschalter vorgesehen sein, und die technische Anlage kann allein mittels der Anzeige- und Eingabevorrichtung 12a bedient werden. In anderen Beispielen kann in der mobilen Bedieneinheit 12 keine Anzeige- und Eingabevorrichtung 12a vorgesehen sein, und die technische Anlage kann allein mittels des Fußschalters 13 bedient werden. In weiteren Beispielen können sowohl der Fußschalter 13 als auch die Anzeige- und Eingabevorrichtung 12a in der Bedienvorrichtung 10 vorgesehen sein und zum Bedienen der technischen Anlage jeweils einzeln und/oder zusammen eingesetzt werden.

Die Bedienvorrichtung 10 beinhaltet eine Versorgungseinheit 14 zum Versorgen der mobilen Bedieneinheit 12 mit Energie. Die Versorgungseinheit 14 ist im vorliegenden Beispiel als Bodenmatte, vorliegend auch Ladematte 14 genannt, ausgeführt. Die Versorgungseinheit 14 kann z.B. als Trittschutzmatte und/oder ergonomische Gummimatte ausgebildet sein.

Die mobile Bedieneinheit 12 und die Versorgungseinheit 14 weisen, wie Fig. 1 zeigt, eine Einrichtung 16 zur drahtlosen Energieübertragung mit einer Übertragungsfrequenz innerhalb eines vorbestimmten Abstands d zwischen der Versorgungseinheit und der Bedieneinheit auf. Die Einrichtung 16 zur drahtlosen Energieübertragung mit einer Übertragungsfrequenz beinhaltet im vorliegenden Beispiel ein Mittel 16a zur Energieübertragung und zum Signalaustausch und ein Mittel 16b zum Energieempfang und zum Signalaustausch. In den Figuren ist der vorbestimmte Abstand d beispielhaft als Radius eines gestrichelten Kreises dargestellt, der die räumliche Ausdehnung einer Übertragungs-Reichweite r der Einrichtung zur drahtlosen Energieübertragung, in den vorliegenden Beispielen des Mittels 16a zur Energieübertragung und zum Signalaustausch, veranschaulicht. Die Übertragungs-Reichweite r wird hier auch Reichweite r genannt.

Im vorliegenden Beispiel weist die Einrichtung 16 zwei elektrische Spulen 16a und 16b auf. Die Spule 16b ist vorliegend im Basiselement 12c der Bedieneinheit 12 als das Mittel zum Energieempfang und zum Signalaustausch angeordnet und die Spule 16a ist in der Ladematte 14 als das Mittel zur Energieübertragung und zum Signalaustausch angeordnet.

Die Energieübertragung kann in Ausführungsformen mittels magnetischer Induktion mit einer Übertragungsfrequenz von einigen 10 kHz, bevorzugt von weniger als 1 kHz, mehr bevorzugt in einem Bereich von 87 bis 250 Hz, und/oder mit einer Leistung von 0,3 bis 15 Watt, bevorzugt 1 bis 5 Watt, mehr bevorzugt 1 bis 3 Watt erfolgen. Der vorbestimmte Abstand d (Übertragungs-Reichweite r) zwischen der Ladematte 14 und der mobilen Bedieneinheit 12 kann von 0 bis 100 cm, bevorzugt 0 bis 10 cm, mehr bevorzugt 0 bis 2 cm, betragen. Der vorbestimmte Abstand d kann insbesondere durch den maximalen Übertragungsabstand zwischen den Spulen 16a und 16b vorgegeben sein. In Beispielen kann der maximale Übertragungsabstand kleiner als der Durchmesser mindestens einer der Spulen 16a und 16b sein. Ferner kann der Signalaustausch im gleichen Frequenzbereich wie die Frequenzübertragung stattfinden, z.B. mit einer Übertragungsgeschwindigkeit von bis zu 2 Kilobit pro Sekunde.

Im vorliegenden Beispiel hat die Spule 16a einen Durchmesser von ungefähr 50 mm, während die Spule 16b einen Durchmesser von ungefähr 40 mm besitzt. In anderen Beispielen können mehrere, sich überlagernde Spulen 16a und/oder mehrere, sich überlagernde Spulen 16b vorgesehen sein. Vorliegend überträgt die Spule 16a an die Spule 16b mittels magnetischer Induktion Energie mit einer Übertragungsfrequenz in einem Bereich von 100 bis 200 Hz und mit einer Leistung von 3 bis 4 Watt, innerhalb des vorbestimmten Abstands d (Übertragungs-Reichweite r) zwischen der Ladematte 14 und der mobilen Bedieneinheit 12 von 0 bis 10 cm. Ferner findet der Signalaustausch in diesem Beispiel im Frequenzbereich von 100 bis 150 Hz statt, mit einer Übertragungsgeschwindigkeit von 1 Kilobit pro Sekunde. Im vorliegenden Beispiel ist die mobile Bedieneinheit 12 zusätzlich mit einem Akkumulator (nicht gezeigt), auch Akku genannt, ausgestattet, in dem die übertragene Energie gespeichert werden kann. Zum Speichern der übertragenen Energie kann alternativ oder zusätzlich mindestens ein Kondensator vorgesehen sein.

In alternativen Beispielen können statt Spulen Antennen eingesetzt werden und die Energie sowie das Sicherheitsprotokoll können z.B. mittels Funkwellen übertragen werden.

Im Betrieb des vorliegenden Beispiels ist oder wird, wie in Fig. 2a gezeigt, die Versorgungseinheit 14, d.h. die Ladematte 14, einer technischen Anlage 100 ortsfest zugeordnet und mit dieser Energie- und Daten-übertragend drahtlos oder drahtgebunden verbunden. Beispielweise weist die Versorgungseinheit 14 ein Steuermodul 18 auf, das mit einer zentralen Steuerung der technischen Anlage 100 datenleitend verbunden ist. Zum Bedienen der technischen Anlage 100 wird die mobile Bedieneinheit 12 mit ihrer Spule 16b innerhalb des vorbestimmten Abstands d, d.h. in Übertragungs-Reichweite r in der Nähe der Versorgungseinheit 14 positioniert. Dadurch befindet sich die Spule 16b innerhalb des maximalen Übertragungsabstands der Spule 16a, also zumindest teilweise innerhalb der Reichweite r. Die mobile Bedieneinheit 12 wird mittels der Spulen 16a und 16b mit Energie versorgt, wobei innerhalb des vorbestimmten Abstands d zwischen der Versorgungseinheit 14 und der mobilen Bedieneinheit 12 die Energie drahtlos mit der Übertragungsfrequenz von der Spule 16a an die Spule 16b übertragen wird. Im Verlauf der Energieübertragung wird ein Sicherheitsprotokoll drahtlos übertragen. Zudem kann die mobile Bedieneinheit 12 dabei lokalisiert, d.h. ihr Standort ermittelt werden.

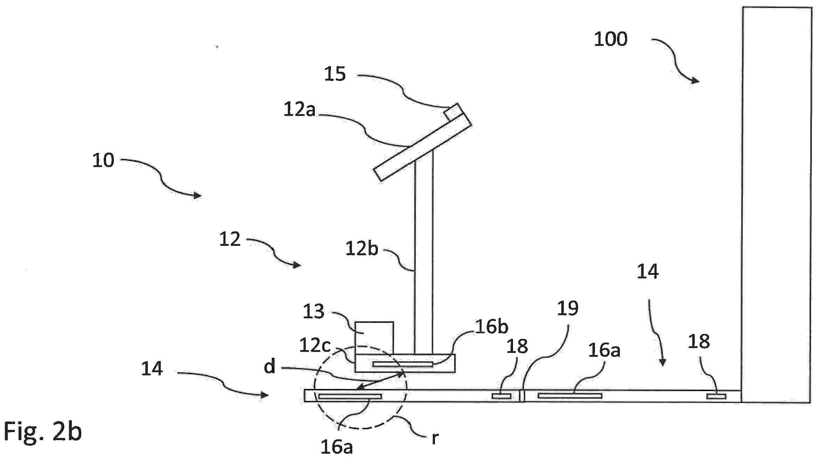

Fig. 2b veranschaulicht, dass in einigen Beispielen die Versorgungseinheit 14 durch Koppeln mit weiteren Versorgungseinheiten 14 modular erweiterbar ist. Mehrere Versorgungseinheiten 14 können in einer Richtung senkrecht zur technischen Anlage 100 miteinander zu einem Cluster verbunden sein, wie in Fig. 2b anhand zweier Versorgungseinheiten 14 gezeigt ist. Hierfür können die Versorgungseinheiten 14 mechanisch, energieübertragend, signalübertragend und/oder datenleitend miteinander verbunden oder verbindbar sein, beispielsweise mittels mindestens einer Schnittstelle 19. Alternativ oder zusätzlich können mehrere Versorgungseinheiten 14 in einer Richtung parallel zu der technischen Anlage 100 gekoppelt sein, die z.B. im Falle von Biegemaschinen 1 bis 8 m lang sein kann. Auf diese Weise ist die Größe der mindestens einen Versorgungseinheit 14 an die Größe der technischen Anlage 100 anpassbar. Die Energie und das Sicherheitsprotokoll und optional weitere Daten werden im Betrieb von denjenigen Versorgungseinheit(en) 14 übertragen, in deren Reichweite r sich die Bedieneinheit 12 befindet. Wird also im Beispiel der Fig. 2b die Bedienvorrichtung 12 oberhalb des Clusters aus Versorgungeinheiten 14 aus dem vorbestimmten Abstand d zu einer der Versorgungseinheiten 14 verschoben, wird der Energie- und Datenaustausch automatisch mit derjenigen Versorgungseinheit 14 oder denjenigen Versorgungseinheiten 14 weitergeführt, zu der/denen die Bedieneinheit 12 innerhalb des jeweiligen vorbestimmten Abstands d angeordnet ist.

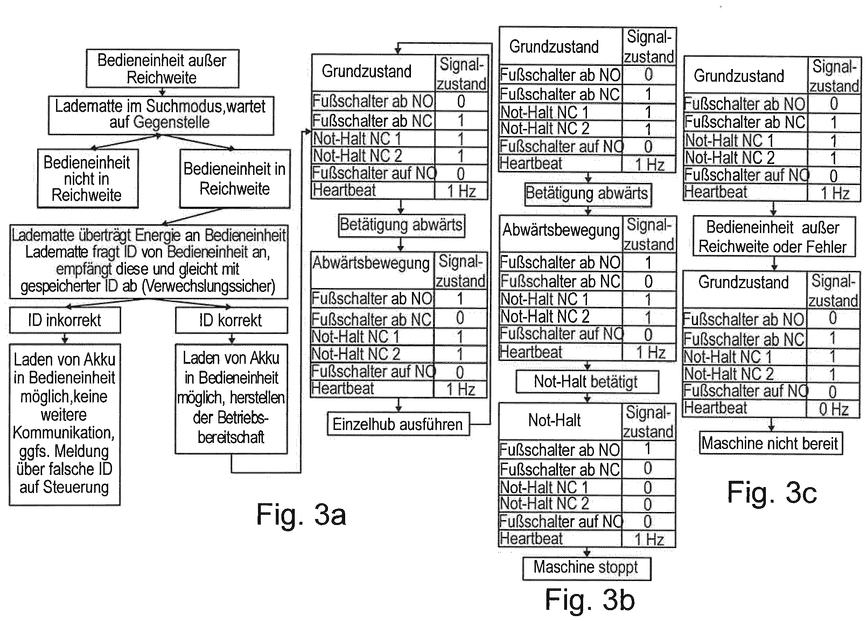

Fig. 3a bis 3c zeigen schematisch ein Beispiel eines Verfahrens zum Bedienen der technischen Anlage 100 mit der Bedienvorrichtung 10. Im Falle dieses Beispiels handelt es sich bei der technischen Anlage 100 um eine Biegemaschine, die betätigt wird, indem z.B. deren bewegliche Oberwange, an der ein Biegewerkzeug vorgesehen ist, zum Biegen eines Werkstücks abwärts bewegt wird. Mittels der mobilen Bedieneinheit 12 können zur Bedienung der Biegemaschine mindestens die Befehle für das Verfahren der Oberwange abwärts und aufwärts und für den Not-Halt ausgelöst werden.

Im vorliegenden Beispiel beinhaltet das Sicherheitsprotokoll die Abfrage und Prüfung einer Identifikationsnummer ID der Bedieneinheit 12. Optional können, wie in Fig. 3a bis 3c gezeigt ist, der Verbindungsaufbau und/oder Steuersignale in das Sicherheitsprotokoll zumindest teilweise integriert sein, insbesondere Signalzustände und Signalfolgen für den Fußschalter 13 und/oder den Not-Halt-Schalter 15 und/oder für die Prüfung eines Heartbeats (engl. für Herzschlag) der Bedieneinheit 12. Das Sicherheitsprotokoll und optional weitere Signale kann/können auf die Übertragungsfrequenz zumindest teilweise mit einer Eigenfrequenz im selben Frequenzbereich wie die Energieübertragung aufmoduliert werden.

Fig. 3a stellt zu Beginn des Verfahrens einen Verbindungsaufbau, auch Handshake/Pairing genannt, zwischen der mobilen Bedieneinheit 12 und der Versorgungseinheit 14 dar. Wie in Fig. 3a veranschaulicht ist, befindet sich die Bedieneinheit 12 zunächst außerhalb des vorbestimmten Abstands d zur Versorgungseinheit 14, vorliegend die Ladematte 14. Das heißt, die Bedieneinheit 12 ist außerhalb der Übertragungs-Reichweite r zur Ladematte 14 positioniert. Die Ladematte 14 befindet sich im Suchmodus, in dem sie auf die Bedieneinheit 12 als Gegenstelle wartet. Solange die Bedieneinheit 12 nicht in Reichweite r ist und sich die Spulen 16a und 16b nicht innerhalb ihres maximalen Übertragungsabstands befinden, kann die Biegemaschine 100 nicht betätigt werden.

Wenn die Bedieneinheit 12, insbesondere deren Spule 16b, zumindest teilweise in den vorbestimmten Abstand d zur Ladematte 14 transportiert wird, befindet sich die Bedieneinheit in Reichweite r zur Ladematte 14. Daraufhin überträgt die Ladematte 14 mit ihrer Spule 16a Energie an die Spule 16b der Bedieneinheit 12. Das Sicherheitsprotokoll wird ausgeführt. Die Ladematte 14 fragt von der Bedieneinheit 12 deren ID an, empfängt diese ID und gleicht diese ID mit einer oder mehreren gespeicherten IDs, die eine oder mehrere Soll-IDs angibt, ab. Wenn die von der Bedieneinheit 12 übertragene ID nicht korrekt ist, d.h. nicht mit einer der gewünschten Soll-IDs übereinstimmt, kann im vorliegenden Beispiel zwar Energie zumindest kurzzeitig an die Bedieneinheit 12 übertragen und in den Akku der Bedieneinheit geladen werden, jedoch findet keine weitere, auf den Betrieb der Biegemaschine 100 bezogene Kommunikation zwischen der Bedieneinheit 12 und der Ladematte 14 statt. In diesem Fall kann mittels dem Steuermodul 18 der Ladematte 14 an die zentrale Steuerung der Biegemaschine 100 der Empfang einer nicht korrekten ID und/oder auch der Standort der Bedieneinheit 12 mit der nicht korrekten ID gemeldet werden, jedoch wird keine Betriebsbereitschaft der Biegemaschine 100 hergestellt.

Wenn die von der Bedieneinheit 12 übertragene ID korrekt ist und mit der Soll-ID übereinstimmt, ist die Ladematte 14 mit der gewünschten Bedieneinheit 12 Energie- und Daten-übertragend verbunden. Dies ermöglicht eine bestimmungsgemäße und verwechslungssichere Zuordnung der Bedieneinheit 12 zur Biegemaschine 100, so dass eine unerwünschte Zuordnung der Bedieneinheit 12 zu einer z.B. benachbarten Biegemaschine vermieden werden kann. Die Bedieneinheit 12 wird mit Energie versorgt und ihr Akku wird geladen. Ferner wird die Betriebsbereitschaft der Biegemaschine 100 hergestellt und ein Betrieb der Biegemaschine 100 mit der Bedieneinheit 12 der korrekten ID wird ermöglicht.

Wie im Beispiel der Fig. 3a gezeigt ist, kann nach dem Verbindungsaufbau ausgehend von einem Grundzustand die Biegemaschine 100 mit dem Fußschalter 13 betätigt werden. Im Grundzustand sind die Signalzustände Fußschalter ab (abwärts) NO (normally open) 0 und Fußschalter ab NC (normally closed) 1. Zwei Signalzustände NC 1 und NC 2 für den Not-Halt-Schalter 15 sind im Grundzustand jeweils auf 1 und der Signalzustand Fußschalter auf (aufwärts) NO ist auf 0 gestellt. Im vorliegenden Beispiel wird innerhalb der Reichweite r ein Heartbeat der Bedieneinheit 12 von der Versorgungseinheit 14 erfasst. Der Heartbeat der Bedieneinheit 12 beträgt im Grundzustand 1 Hz. Nun wird der Fußschalter 13 vom Bediener betätigt und eine Abwärtsbewegung der Oberwange der Biegemaschine befohlen. Dadurch werden die Signalzustände Fußschalter ab NO auf 1 und NC auf 0 geschaltet. Ein Einzelhub der Oberwange wird ausgeführt. Schließlich wird zum Grundzustand der Maschine zurückgekehrt.

In Fig. 3b ist dargestellt, wie im Hubvorgang der Fig. 3a ein Not-Halt der Biegemaschine 100 ausgelöst werden kann. Dabei wird, beispielsweise während der Abwärtsbewegung der Oberwange, der Hot-Halt-Schalter 15 an der Anzeige- und Eingabevorrichtung 12a betätigt. Dadurch werden die Signalzustände Not-Halt NC 1 und NC 2 jeweils auf 0 gestellt, wodurch die Biegemaschine 100 gestoppt wird.

In Fig. 3c ist eine Störung der Verbindung zwischen der Bedieneinheit 12 und der Ladematte 14 veranschaulicht. Die Biegemaschine 100 befindet sich beispielweise in ihrem Grundzustand. Wird die Übertragung von Energie zwischen der Ladematte 14 und der Bedieneinheit 12 unterbrochen, z.B. wegen eines Fehlers, einer Störung oder weil die Bedieneinrichtung 12 aus der Reichweite r zur Ladematte 14 bewegt wird, wechselt der Signalzustand des Heartbeats der Bedieneinheit 12 auf 0 Hz. Dadurch wird die Betriebsbereitschaft der Biegemaschine 100 beendet.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 10: Bedienvorrichtung
- 12: mobile Bedieneinheit
- 12a: Anzeige- und Eingabevorrichtung
- 12b: Ständerelement
- 12c: Basiselement
- 13: Fußschalter
- 14: Versorgungseinheit
- 15: Not-Halt-Schalter
- 16: Einrichtung zur drahtlosen Energieübertragung
- 16a: Mittel zur Energieübertragung und zum Signalaustausch; elektrische Spule
- 16b: Mittel zum Energieempfang und zum Signalaustausch; elektrische Spule
- 18: Steuermodul
- 19: Schnittstelle
- 100: technische Anlage
- d: vorbestimmter Abstand zwischen der Versorgungseinheit und der mobilen Bedieneinheit
- r: Übertragungs-Reichweite

## Patentansprüche

1. Bedienvorrichtung (10) für mindestens eine technische Anlage (100), insbesondere für mindestens eine Werkzeugmaschine, insbesondere eine Biegemaschine, mit mindestens einer mobilen Bedieneinheit (12) zum Bedienen der mindestens einen technischen Anlage (100); und mit mindestens einer der technische Anlage (100) ortsfest zuordnenbaren und mit dieser energie- und signalübertragend verbindbaren Versorgungseinheit (14) zum Versorgen der mindestens einen mobilen Bedieneinheit (12) mit Energie;
wobei die mindestens eine mobile Bedieneinheit (12) und die mindestens eine Versorgungseinheit (14) eine Einrichtung (16) zur drahtlosen Energieübertragung mit einer Übertragungsfrequenz innerhalb eines vorbestimmten Abstands (d) zwischen der Versorgungseinheit (14) und der mobilen Bedieneinheit (12) und zur drahtlosen Übertragung eines Sicherheitsprotokolls im Verlauf der Energieübertragung aufweisen.

2. Bedienvorrichtung nach Anspruch 1,
wobei das Sicherheitsprotokoll zumindest teilweise auf die Übertragungsfrequenz abgestimmt und/oder zumindest teilweise auf diese aufmoduliert ist; und/oder wobei das Sicherheitsprotokoll als eine Folge von Signalen, insbesondere als zwischen der Versorgungseinheit (14) und der mobilen Bedieneinheit (12) austauschbare Signale, ausgebildet ist.

3. Bedienvorrichtung nach Anspruch 1 oder 2,
wobei die Versorgungseinheit (14) mindestens ein Mittel (16a) zur Energieübertragung und zum Signalaustausch aufweist; und/oder
wobei die mobile Bedieneinheit (12) mindestens ein Mittel (16b) zum Energieempfang und zum Signalaustausch aufweist; und/oder
wobei der vorbestimmte Abstand (d) zwischen der Versorgungseinheit (14) und der mobilen Bedieneinheit (12), insbesondere zwischen dem Mittel (16a) zur Energieübertragung und zum Signalaustausch und dem Mittel (16b) zum Energieempfang und zum Signalaustausch, 0-100 cm, vorzugsweise 1-50 cm, besonders bevorzugt 1-10 cm beträgt.

4. Bedienvorrichtung nach einem der vorstehenden Ansprüche,
wobei die Versorgungseinheit (14), insbesondere das Mittel (16a) zur Energieübertragung und zum Signalaustausch, in eine Trittschutzmatte oder in einen Fußschalter (13) integriert ist.

5. Bedienvorrichtung nach einem der vorstehenden Ansprüche,
wobei die Versorgungseinheit (14), insbesondere das Mittel zur Energieübertragung und zum Signalaustausch, zum Übertragen der Energie und/oder Austauschen der Signale mittels elektromagnetischer Strahlung, insbesondere mittels magnetischer Induktion, Funkwellen und/oder Licht, ausgebildet ist; und/oder wobei die mobile Bedieneinheit (12), insbesondere das Mittel zum Energieempfang und zum Signalaustausch, zum Empfangen der Energie und/oder Austauschen der Signale mittels elektromagnetischer Strahlung, insbesondere mittels magnetischer Induktion, Funkwellen und/oder Licht, ausgebildet ist.

6. Bedienvorrichtung nach Anspruch 5,
wobei das Mittel (16b) zum Energieempfang und zum Signalaustausch der mobilen Bedieneinheit (12) und das Mittel (16a) zur Energieübertragung und zum Signalaustausch der Versorgungseinheit (14) aufeinander abgestimmt oder abstimmbar sind.

7. Bedienvorrichtung nach einem der vorstehenden Ansprüche, wobei mindestens zwei Versorgungseinheiten (14), insbesondere mindestens zwei Trittschutzmatten, mechanisch, energieübertragend, signalübertragend und/oder datenleitend miteinander verbunden oder verbindbar sind.

8. Bedienvorrichtung nach Anspruch 7,
wobei die Größe der Versorgungeinheiten (14) an die Größe der mobilen Bedieneinheit (12) und/oder an die Größe der mindestens einen technischen Anlage (100) angepasst ist; und/oder
wobei die resultierende Größe der verbundenen oder verbindbaren Versorgungseinheiten (14) an die Größe der mindestens einen technischen Anlage (100) angepasst ist.

9. Bedienvorrichtung nach einem der Ansprüche 8 und 9,
wobei die Größe der Versorgungseinheiten (14) und/oder der vorbestimmte Abstand (d) derart gewählt ist, dass mittels derjenigen der verbundenen Versorgungseinheiten (14), die innerhalb des vorbestimmten Abstands (d) zu der mobilen Bedieneinheit (12) angeordnet ist/sind, die Energie von einer der technischen Anlagen (100) an die mobile Bedieneinheit (12) drahtlos übertragbar ist oder übertragen wird.

10. Bedienvorrichtung nach einem der vorstehenden Ansprüche,
wobei das Sicherheitsprotokoll eine einseitige oder wechselseitige Authentifikation und/oder eine einseitige oder wechselseitige Funktionsfähigkeitsprüfung der Versorgungseinheit (14), der mobilen Bedieneinheit (12) und/oder der technischen Anlage (100) beinhaltet.

11. Bedienvorrichtung nach einem der vorstehenden Ansprüche,
wobei mindestens ein Element ausgewählt aus der mindestens einen Versorgungseinheit (14) und der mindestens einen mobilen Bedieneinheit (12) ein Steuermodul (18) aufweist, das mit einer zentralen Steuerung der technischen Anlage (100) datenleitend verbunden oder verbindbar ist, insbesondere drahtlos und/oder drahtgebunden.

12. Bedienvorrichtung nach einem der Ansprüche 10 und 11,
wobei die mindestens eine Versorgungseinheit (14) und/oder die mindestens eine mobile Bedieneinheit (12), insbesondere mittels des jeweiligen Steuermoduls (18), zum drahtlosen Übertragen der Energie von einer der technischen Anlagen (100) an die mobile Bedieneinheit (12) nur unter der Voraussetzung, dass die mobile Bedieneinheit (12) innerhalb des vorbestimmten Abstands (d) zur Versorgungseinheit (14) angeordnet ist, ausgebildet ist; und/oder
wobei die mindestens eine Versorgungseinheit (14) und/oder die mindestens eine mobile Bedieneinheit (12), insbesondere mittels des jeweiligen Steuermoduls (18), zum drahtlosen Übertragen zumindest eines Teils der Energie von einer der technischen Anlagen (100) die mobile Bedieneinheit nur unter der Voraussetzung, dass die mobile Bedieneinheit (12) an der zentralen Steuerung einer der technischen Anlagen (100) angemeldet ist, ausgebildet ist.

13. Bedienvorrichtung nach einem der vorstehenden Ansprüche,
wobei die mindestens eine Versorgungseinheit (14) zum Schalten in einen stromlosen Zustand und/oder Standby-Zustand bei Abwesenheit einer drahtlosen Energieübertragung und/oder bei Abwesenheit einer drahtlosen Signalübertragung und/oder außerhalb des vorbestimmten Abstands (d) zu der mobilen Bedieneinheit (12) ausgebildet ist;
und/oder
wobei mindestens ein Element ausgewählt aus der mindestens einen Versorgungseinheit (14), der mindestens einen mobilen Bedieneinheit (12), dem Steuermodul (18) der Versorgungseinheit und dem Steuermodul (18) der mindestens einen mobilen Bedieneinheit zum Ermitteln der Anbindung der mindestens einen mobilen Bedieneinheit (12) an die technische Anlage (100) bei drahtloser Energieübertragung an die mobile Bedieneinheit (12) und/oder drahtlose Signalübertragung zu der mobilen Bedieneinheit (12) ausgebildet ist.

14. Technische Anlage (100), Werkzeugmaschine oder Biegemaschine, insbesondere sicherheitsgerichtete technische Anlage, Werkzeugmaschine oder Biegemaschine, mit einer Bedienvorrichtung (10) nach einem der vorhergehenden Ansprüche.

15. Verwendung einer Bedienvorrichtung nach einem der Ansprüche 1 bis 13 zur Bedienung mindestens einer technischen Anlage (100), Werkzeugmaschine oder Biegemaschine, insbesondere einer sicherheitsgerichteten technischen Anlage, Werkzeugmaschine oder Biegemaschine.

16. Verfahren zum Bedienen mindestens einer technischen Anlage mit einer Bedienvorrichtung (10), insbesondere mit einer Bedienvorrichtung nach einem der Ansprüche 1 bis 13, insbesondere zum Bedienen mindestens einer Werkzeugmaschine oder mindestens einer Biegemaschine, wobei die Bedienvorrichtung (10) mindestens eine mobile Bedieneinheit (12) zum Bedienen der mindestens einen technischen Anlage (100) und mindestens eine Versorgungseinheit (14) zum Versorgen der mindestens einen mobilen Bedieneinheit (12) mit Energie aufweist; wobei die Versorgungseinheit (14) der technischen Anlage (100) ortsfest zugeordnet und mit dieser energie- und signalübertragend verbunden ist;
wobei das Verfahren aufweist:
Versorgen mindestens einer der mobilen Bedieneinheiten (12) mit Energie, wobei innerhalb eines vorbestimmten Abstands (d) zwischen einer der Versorgungseinheiten (14) und der mobilen Bedieneinheit (12) die Energie drahtlos mit einer Übertragungsfrequenz übertragen wird und
wobei im Verlauf der Energieübertragung ein Sicherheitsprotokoll drahtlos übertragen wird.

17. Verfahren nach Anspruch 16,
wobei die mindestens eine technische Anlage (100) vermittelt über die Versorgungseinheit (14) über die mobile Bedieneinheit (12) bedient wird; und/oder wobei als Sicherheitsprotokoll Signale zwischen der Versorgungseinheit (14) und der mobilen Bedieneinheit (12) drahtlos ausgetauscht werden; und/oder wobei das Sicherheitsprotokoll als eine Folge von Signalen übertragen wird; und/oder
wobei das Sicherheitsprotokoll zumindest teilweise auf die Übertragungsfrequenz abgestimmt und/oder zumindest teilweise auf diese aufmoduliert wird.
